# EUROPEAN PATENT SPECIFICATION

(11) **EP 2 288 101 B1**
(45) Date of publication and mention of the grant of the patent: **11.05.2016**
(21) Application number: 09812648.5
(22) Date of filing: 04.09.2009
(51) Int. Cl.: H04L 29/06

(54) **METHOD, SYSTEM AND SERVER FOR SELECTING USER**
VERFAHREN, SYSTEM UND SERVER ZUR BENUTZERAUSWAHL
PROCÉDÉ, SYSTÈME ET SERVEUR POUR SÉLECTIONNER UN UTILISATEUR

(30) Priority: 09.09.2008 CN 200810148906
(43) Date of publication of application: 23.02.2011
(73) Proprietor: Huawei Device Co., Ltd., Longgang District Shenzhen Guangdong 518129 (CN)
(72) Inventor: LI, Xiaojuan, Shenzhen Guangdong 518129 (CN); LIU, Haitao, Shenzhen Guangdong 518129 (CN); WANG, Rui, Shenzhen Guangdong 518129 (CN); SONG, Yue, Shenzhen Guangdong 518129 (CN)
(74) Representative: Pfenning, Meinig & Partner mbB
(86) International application number: PCT/CN2009/073752
(87) International publication number: WO 2010/028582

(56) References cited:
- EP-A1- 1 587 332
- CN-A- 1 794 831
- CN-A- 1 842 006
- CN-A- 1 859 322
- CN-A- 101 098 267
- CN-A- 101 223 756
- OPEN MOBILE ALLIANCE: "Condition Based URIs Selection Requirements. Draft Version 1.0 - 29 Aug 2008", OMA-RD-CBUS-V1_0-20080829-D, [Online] no. Draft Version 1.0, 29 August 2008 (2008-08-29), pages 1-21, XP002634545, Retrieved from the Internet: URL:http://member.openmobilealliance.org/f tp/Public_documents/PAG/Permanent_document s/OMA-RD-CBUS-V1_0-20090829-C.zip> [retrieved on 2011-04-26]
- OPEN MOBILE ALLIANCE: "Condition Based URIs Selection Requirements, Candidate Version 1.0 - 10 Jul 2009, OMA-RD-CBUS-V1_0-20090710-C", OMA-RD-CBUS-V1_0-20090710-C,, [Online] no. CANDIDATE VERSION 1.0, 10 July 2009 (2009-07-10), pages 1-23, XP002558513, Retrieved from the Internet: URL:http://member.openmobilealliance.org/f tp/Public_documents/PAG/Permane nt_documents/OMA-RD-CBUS-V1_0-20090710-C.z ip> [retrieved on 2009-12-02]

## Description

### FIELD OF THE INVENTION

The present invention relates to the field of mobile communications, and in particular, to a method, a system and a server for selecting users.

### BACKGROUND OF THE INVENTION

Currently, in the existing communications technologies, different user information is distributed in different servers respectively, for example, presence information is stored in a presence server, and the presence information includes online information, interest and hobby, and mood of users', location information is stored in a location server, and the location information is current geographic location information of users; and terminal capability information is stored in a capability management server which may be a User Agent Profile (UAProf) server or a Device Profile Evolution (DPE) server.

The UAProf server records fixed capability information of a terminal, such as the size of a display screen and a CPU frequency, and the fixed capability information is often determined before delivery. The terminal capability recorded by the DPE server is dynamic capability information, such as a display resolution and an effective storage space, and the dynamic capability information changes when a user uses the terminal.

In some application scenarios, for example, a requester needs to obtain a list of information about users that are in the Online state and are geographically located near a shopping mall, where the user information includes current presence information and geographic location information of the users. According to a conventional method, the requester first sends a request message to a presence server to request for Uniform Resource Identifiers (URIs) of the users that are in the Online state; and then the requester sends a request message to a location server to request for URIs of the users that are geographically located near the shopping mall. The requester comprehensively evaluates the users according to reply messages returned from the presence server and the location server, so as to obtain the users that are in the Online state and are geographically located near the shopping mall. However, in this method, the requester needs to send the request messages to different servers and receive reply messages returned from the different servers, so as to obtain the users satisfying the conditions, and evaluate the returned result, and this brings considerable inconvenience to the requester.

In order to solve the above problem, a Condition Based URIs Selection (CBUS) technology is developed accordingly. The basic content of the CBUS technology lies in that, a user is selected based on various information provided by a requester according to some conditions, so as to determine whether the user is the one that the requester is looking for. A range for selecting users may be a group of users set by the requester, or the range is not specified, and at this time, the CBUS server must use a search operation to look for all the users satisfying the conditions. In order to obtain the users satisfying the conditions, the requester may send requests for geographic location information, presence information or terminal capability information to a CBUS server; and the CBUS server obtains the presence information from a presence server, obtains the geographic location information from a location server, and obtains the terminal device capability information from a UAProf server or a DPE server, and then comprehensively evaluates the results, and sends the URIs of the users satisfying the conditions set by the requester to the requester. When the CBUS selects users, two manners may be adopted: One is a single selection manner like a snapshot, that is, selecting only once according to whether the user information satisfies the conditions; and the other is a multiple selection manner, and in this manner, the user information is continuously monitored, and the users are selected continuously according to updated user information, so as to obtain an updated selection result.

The document from the Open Mobile Alliance "Condition Based URIs Selection Requirements. Draft Version 1.0 - 29 Aug 2008" discloses a CBUS server for selecting users based on conditions.

EP1587332 discloses a method and apparatus for dynamic group address creation based on common characteristics of the users.

In the conception of the present invention, the inventor finds that the prior art has at least the following problems.

The existing CBUS technology neither provides any specific implementation manner for multiple selections, nor provides any solution with respect to how to process the result of multiple selections, so that diversified demands of users cannot be satisfied, and the using by the users is thus affected.

### SUMMARY OF THE INVENTION

In order to satisfy diversified demands of users and improve the quality of user experience, the present invention is directed to a method, a system and a server for selecting users. The technical solutions are as follows.

A method for selecting users is provided, where the method includes:
receiving a request message sent by a requester, where the request message includes multiple conditions for selecting users, a selection result processing manner and a specific implementation manner for selecting users;
obtaining, according to the specific implementation manner for selecting users, user information respectively satisfying each condition; and
obtaining by selecting the user information satisfying the multiple conditions from the user information respectively satisfying each condition, and returning the user information satisfying the multiple conditions to the requester according to the selection result processing manner;
wherein the specific implementation manner for selecting users is adopted for periodically or regularly evaluating the conditions for selecting users, and information of the specific implementation manner comprises: at least one of: a time interval for implementing selection, a starting time for implementing selection, and an ending time for implementing selection.

A server for selecting users based on conditions is provided, where the server includes:
a receiving module, configured to receive a request message sent by a requester, where the request message includes multiple conditions for selecting users , a selection result processing manner and a specific implementation manner for selecting users;
a processing module, configured to obtain user information respectively satisfying each condition according to the specific implementation manner for selecting users, and obtain by selecting the user information satisfying the multiple conditions from the user information respectively satisfying each condition; and
a sending module, configured to send the user information satisfying the multiple conditions obtained by the processing module to the requester according to the selection result processing manner;
wherein the specific implementation manner for selecting users is adopted for periodically or regularly evaluating the conditions for selecting users, and may include at least one of: a time interval for implementing selection, a starting time for implementing selection, and an ending time for implementing selection.

A system for selecting users is provided, where the system includes the server for selecting users as described above and an enabler.

With the technical solutions according to the present invention, with the aid of setting the multiple conditions for selecting users and the specific implementation manner for selecting users, diversified demands of users can be satisfied, and thus the quality of user experience is improved.

### BRIEF DESCRIPTION OF THE DRAWINGS

To illustrate the technical solutions according to the embodiments of the present invention more clearly, the accompanying drawings for describing the embodiments are introduced briefly in the following. Apparently, the accompanying drawings in the following description are only some embodiments of the present invention, and persons of ordinary skill in the art can derive other drawings from the accompanying drawings without creative efforts.
FIG. 1 is a flow chart of a method for selecting users according to Embodiment 1 of the present invention;
FIG. 2 is a flow chart of another method for selecting users according to Embodiment 2 of the present invention;
FIG. 3 is a structural view of a server for selecting users based on conditions according to Embodiment 3 of the present invention; and
FIG. 4 is a structural view of another server for selecting users based on conditions according to Embodiment 3 of the present invention.

### DETAILED DESCRIPTION OF THE EMBODIMENTS

In order to make the objectives, technical solutions, and advantages of the present invention clearer, the implementation of the embodiments of the present invention is described in further detail in the following with reference to the accompanying drawings. It is obvious that the embodiments to be described are only a part rather than all of the embodiments of the present invention. All other embodiments obtained by persons skilled in the art based on the embodiments of the present invention without creative efforts shall fall within the protection scope of the present invention.

### Embodiment 1

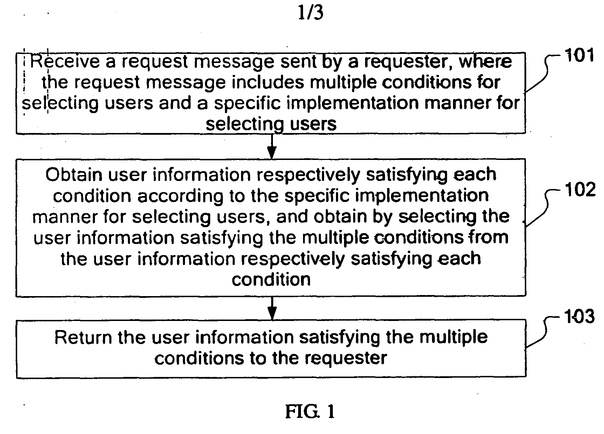

Embodiment 1 of the present invention provides a method for selecting users. As shown in FIG. 1, the method includes the following steps.

In step 101, a request message of a requester is received, where the request message includes multiple conditions for selecting users and a specific implementation manner for selecting users.

The multiple conditions for selecting users include at least one of the following information: a presence information condition, a location information condition, and a terminal capability information condition.

The specific implementation manner for selecting users is adopted for periodically or regularly evaluating the conditions for selecting users, and information of the specific implementation manner includes at least one of: a time interval for implementing selection, a starting time for implementing selection, and an ending time for implementing selection.

Furthermore, the specific implementation manner for selecting users may be specified by the requester in the request message, or is specified by a server, and loaded into the request message by the requester.

In step 102, user information respectively satisfying each condition is obtained according to the specific implementation manner for selecting users, and the user information satisfying the multiple conditions is obtained in the way of being selected from the user information respectively satisfying each condition.

In step 103, the obtained user information satisfying the multiple conditions is returned to the requester.

Through the technical solution of Embodiment 1, diversified demands of users can be satisfied, and thus the user experience is improved.

### Embodiment 2

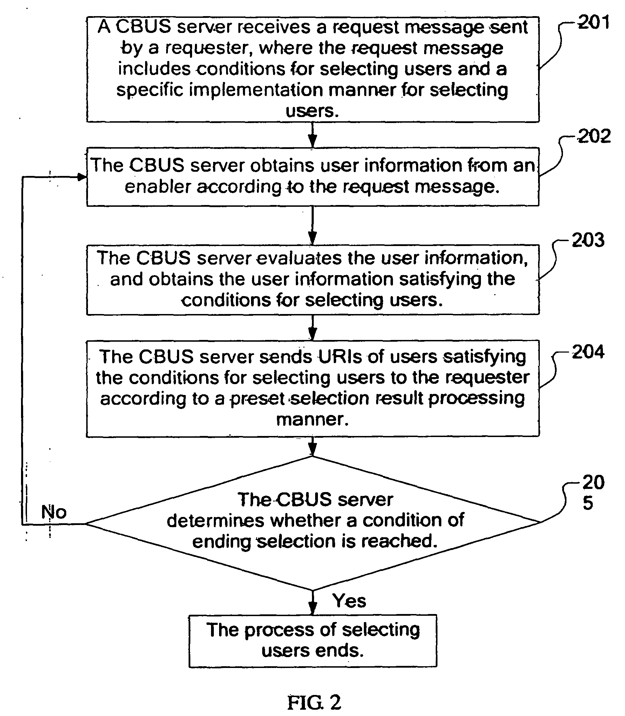

Embodiment 2 of the present invention provides a method for selecting users. As shown in FIG. 2, the method includes the following steps.

In step 201, a CBUS server receives a request message sent by a requester, where the request message includes multiple conditions for selecting users and a specific implementation manner for selecting users.

The specific implementation manner for selecting users is adopted for periodically or regularly evaluating the conditions for selecting users, and information of the specific implementation manner includes at least one of: a time interval for implementing selection, a starting time for implementing selection, and an ending time for implementing selection.

In step 202, the CBUS server obtains user information from an enabler according to the request message.

The enabler includes a presence server, a location server, and a capability management server. If presence information is required, the CBUS server obtains the presence information from the presence server; if location information is required, the CBUS server obtains the location information from the location server; and if terminal capability information is required, the CBUS server obtains the terminal capability information from the capability management server.

In step 203, the CBUS server evaluates the user information, and obtains the user information satisfying the multiple conditions for selecting users.

In step 204, the CBUS server sends, according to a preset selection result processing manner, URIs of users satisfying the multiple conditions for selecting users, to the requester.

The preset selection result processing manner is: directly sending the URIs of the users satisfying the multiple conditions for selecting users obtained after each selection to the requester without filtering.

In step 205, the CBUS server determines whether a condition of ending selection is met. If the condition of ending selection is not met, step 202 is performed; if the condition of ending selection is met, the process of selecting users ends.

It should be noted that: firstly, the selection result processing manner may be set by the requester in the request message sent to the CBUS server, instead of being set by the CBUS server; secondly, the requester may further set a range for selecting users in the request message sent to the CBUS server, and if the range for selecting users is not set, it indicates that the range for selecting users is not limited; thirdly, the selection result processing manner and the range for selecting users may also be set by the requester in the request message at the same time.

The embodiments of the present invention will be described in detail in the following through specific examples and with reference to specific application scenarios.

### First Application Scenario

A requester is an advertiser, and the advertiser wants to send electronic coupons of a shopping mall to online users near the shopping mall, where the users near the shopping mall do not include the users passing by the shopping mall at that time. As for the passers-by, since they are not always near the shopping mall, the users can be filtered by two selections at a certain interval. A specific selection process is as follows.

In step 301, the advertiser sends a request message to a CBUS server, where the request message includes: multiple conditions for selecting users, a specific implementation manner for selecting users, and a selection result processing manner.

The multiple conditions for selecting users include: online, near the shopping mall, and the user range is not limited.

The specific implementation manner for selecting users includes: the period for selection is 10 minutes, and ending at 9 p.m.

The selection result processing manner is: comparing a result of-each selection with a result of a previous selection, sending the URI of the users satisfying the multiple conditions for detecting users of the two selections, and sending the URI of the same user satisfying the multiple conditions for selecting users to the advertiser only once.

In step 302, after receiving the request message of the advertiser, the CBUS server obtains the users in the Online state from a presence server, and obtains the users that are geographically located near the shopping mall from a location server. The CBUS server learns from information returned by the presence server that users A, B, and C are online, and learns from information returned by the location server that users A and B are near the shopping mall. The CBUS server obtains through evaluation that users A and B satisfy the multiple conditions for selecting users set by the requester. The CBUS then temporarily stores information of users A and B for comparison with a next selection result. A specific storage result is as shown in Table 1.

**Table 1**

| | | | |
|---|---|---|---|
| **Usher** | **Condition Information** | | **Determination and Comparison** |
| **URI** | **Presence Information** | **Location Information** | |
| A@example.com | Online | Shopping mail | Temporarily stored |
| B@example.com | Online | Shopping mall. | Temporarily stored |
| C@example.com | Online | Bookstore | |

In step 303, 10 minutes later, the CBUS server obtains the users in the Online state from the presence server, and obtains the users that are geographically located near the shopping mall from the location server. The CBUS also learns from information returned by the presence server that users A, B, C, and D are online, and learns from information returned by the location server that users B, D, and E are near the shopping mall. The CBUS server obtains through evaluation that users B and D satisfy the multiple conditions for selecting users set by the requester. The CBUS server then compares this selection result with the temporarily stored selection result last time, and finds that user A is not near the shopping mall. In this case, the CBUS server only sends the URI of user B to the advertiser. After the URI of user B is sent, the URI of user B is stored into a sent user list in the CBUS server. A specific storage result is as shown in Table 2.

**Table 2**

| **User** | **Condition Information** | | **Determination and Comparison** |
|---|---|---|---|
| **URI** | **Presence Information** | **Location Information** | |
| A@example.com | Online | Subway | |
| B@example.com | Online | Shopping mall | Sent |
| C@example.com | Online | Bookstore | |
| D@example.com | Online | Shopping mall | Temporarily stored |
| E@example.com | Offline | Shopping mall | |

In step 304, 10 minutes later, the CBUS server obtains the users in the Online state from the presence server, and obtains the users that are geographically located near the shopping mall from the location server. The CBUS also learns from information returned by the presence server and the location server that users B and E satisfy the conditions, and then queries the sent user list, and finds that user B is already in the sent user list, so the information of user B is not sent this time, and the information of user E is temporarily stored. A specific storage result is as shown in Table 3.

**Table 3**

| **User** | **Condition Information** | | **Determination and Comparison** |
|---|---|---|---|
| **URI** | **Presence Information** | **Location Information** | |
| A@example.com | Online | Subway | |
| B@example.com | Online | Shopping mall | Already sent |
| C@example.com | Online | Bookstore | |
| D@example.com | Online | Bookstore | |
| E@example.com | Online | Shopping mall | Temporarily stored |

In step 305, the CBUS server makes a selection every 10 minutes, compares each selection result with a previous selection result, and sends the URIs of the users satisfying the multiple conditions for selecting users set by the requester to the advertiser until the selection ends at 9 p.m.

### Second Application Scenario

Requester A wants to chat with users B, C, D, E, and F about the latest European Football Championship, and conditions for selecting users are: online and loving football. A specific implementation manner for selecting users is: starting at 5 p.m., and ending at 6 p.m.; a range for selecting users is B, C, D, E, and F. In the specific implementation manner for selecting users, if a time interval for evaluation is not specified, the CBUS server considers by default that the time interval is a time interval set by a server (for example, the time interval set by the sever is 10 minutes). A specific selection process is as follows.

In step 401, requester A sends a request message to a CBUS server, where the request message includes: multiple conditions for selecting users, a range for selecting users, and a specific implementation manner for selecting users.

The multiple conditions for selecting users include users who are online and love football.

The range for selecting users is B, C, D, E, and F.

The specific implementation manner for selecting users includes: "starting at 5 p.m., and ending at 6 p.m.

A selection result processing manner is: comparing a result of each reflection with a result of a previous selection, sending the URIs of the users satisfying the multiple conditions for selecting users of the two selections, and sending the URI of the same user satisfying the multiple conditions for selecting users to the requester only once.

In step 402, after receiving the request message, the CBUS server starts at 5 p.m. to obtain user information satisfying the conditions for selecting users from a presence server, and learns from information returned by the presence server that users B, C, and D are online, and users B, D, E and F love football. The CBUS server obtains through evaluation that users B and D satisfy the multiple conditions for selecting users set by the requester. In this case, the CBUS server sends the URIs of users B and D to requester A, and stores the URIs of users B and D into a sent user list. A specific storage result is as shown in Table 4.

**Table 4**

| **User** | **Condition Information** | | | **Determination** |
|---|---|---|---|---|
| **URI** | **State** | **Interest and Hobby** | **Starting Time of Selection** | |
| B@example.com | Online | Football | 17:00 | Already sent |
| C@example.com | Online | Music | 17:00 | |
| D@example.com | Online | Football | 17:00 | Already sent |
| E@example:com | Offline | Football | 17:00 | |
| F@example.com | Offline | Football | 17:00 | |

In step 403, 10 minutes later, the CBUS obtains the user information satisfying the multiple conditions for selecting users from the presence server once again, and learns from information returned by the presence server that the information of the state of user E is changed to online, and users B, D, and E satisfy the range and conditions for selecting users set by the requester. The CBUS server compares users B, D, and E with the sent user list, and as the URIs of users B and D are already sent, the CBUS server only sends the URI of user E to the requester, and stores the URI of user E into the sent user list. A specific storage result is as shown in Table 5.

**Table 5**

| **User** | **Condition Information** | | | **Determination** |
|---|---|---|---|---|
| **URI** | **State** | **Interest and Hobby** | **Starting Time of Selection** | |
| B@example.com | Online | Football | 17:10 | Already sent |
| C@example.com | Online | Music | 17:10 | |
| D@example.com | Online | Football | 17:10 | Already sent |
| E@example.com | Online | Football | 17:10 | Already sent |
| F@example.com | Offline | Football | 17:10 | |

In step 404, the CBUS server selects users every 10 minutes, until the selection ends at 6 p.m.

### Third Application Scenario

In the second application scenario, multiple selections may be set by adopting a periodical interval for selection, and the selections are set through the number of times of selection in this application scenario. For example, requester A wants to send the latest European Football Championship pictures to users B, C, D, E, and F, multiple conditions for selecting users are: online, loving football, terminal capability supporting a multimedia message service, 10 times of selection, a periodical interval for selection being 10 minutes, and a range for selecting users being users B, C, D, E, and F. A specific selection process is as follows.

In step 501, requester A sends a request message to a CBUS server, where the request message includes: multiple conditions for selecting users, a range for selecting users, and a specific implementation manner for selecting users.

The multiple conditions for selecting users include: users who are online and love football, and terminal capability supporting the multimedia message service.

The range for selecting users is B, C, D, E, and F.

The specific implementation manner for selecting users includes: 10 times of selection, and a periodical interval for selection being 10 minutes.

A selection result processing manner preset by the CBUS server is: sending all the URIs of the users satisfying the multiple conditions for selecting users obtained by each selection to requester A.

In step 502, after receiving the request message, the CBUS server starts a first selection, obtains presence information satisfying the multiple conditions for selecting users from a presence server, and obtains information about whether the terminal capability supports the multimedia message service from a terminal capability server (a UAProf server). The CBUS server learns from information returned from the presence server that users B and C are online, and users B, D, E, and F love football, and learns from information returned from the UAProf server that users B, D, and E support the multimedia message service. The CBUS obtains through evaluation that user B satisfies the multiple conditions for selecting users set by the requester, and sends the URI of user B to requester A.

In step 503, the number of times counted by a counter in the CBUS server is added by 1, and then is compared with the number of times set by requester A, and if the number of times counted by the counter is less than 10, the CBUS server continues to make a second selection. In the second selection, users B and D satisfying the multiple conditions for selecting users set by the requester are selected. The CBUS server sends the URIs of users B and D to requester A, and meanwhile, the counter is added by 1, and then is compared with the number of times set by requester A, and if the number of times counted by the counter is less than 10, the selection continues.

In step 504, when the CBUS determines that the number of times of selection in the counter is 10, the selection ends.

### Fourth Application Scenario

In this application scenario, requester A may set multiple conditions at a time, and different conditions are implemented at different time periods, so that at a given time, the CBUS server sends the URIs of the users satisfying the conditions for selecting users to requester A. For example, a first task identifier is set as first, with a range for selecting users being B, C, D, and E, and a condition being at work; a second task identifier is set as second, with a range for selecting users being D, E, F, and G, and a condition being geographically located in Beijing. A specific implementation manner of the multiple selections is: invoking the condition and range of the first task identifier on June 1, 2008, and invoking the-condition and range of the second task identifier on June 2, 2008. A specific selection process is as follows.

In step 601, requester A sends a request message to a CBUS server, where the request message includes: multiple conditions for selecting users, a range for selecting users, a specific implementation manner for selecting users, and a selection result processing manner.

The multiple conditions for selecting users include: a first task identifier being first, with a conditions being at work. The range for selecting users of the first task identifier is B, C, D, and E.

The second task identifier is second, with a condition being geographically located in Beijing. The range for selecting users of the second task identifier is D, E, F, and G

The specific implementation manner for selecting users includes: invoking the first identifier on June 1, 2008, and invoking the second identifier on June 2,2008.

The selection result processing manner includes: sending all the URIs of the users satisfying the multiple conditions for selecting users obtained by each selection to requester A.

In step 602, after receiving the request message, the CBUS starts to implement according to the specific implementation manner for selecting users. For example, the CBUS server starts to execute content of the first identifier on June 1, 2008, finds that the states of users B, C, and D are at work, and the state of user E is at home, and thus obtains that users B, C, and D satisfy the multiple conditions for selecting users and the range for selecting users set by the requester. The CBUS server sends the URIs of users B, C, and D to requester A, and then ends the selection of the first task identifier. The CBUS server executes content of the second identifier on June 2, 2008, finds that the geographic locations of users D and F are in Beijing, the geographic location of user E is in Tianjin, and the geographic location of user G is in Shanghai. The CBUS server obtains through evaluation that users D and F satisfy the multiple conditions for selecting users and the range for selecting users set by the requester, sends the URIs of users D and F to requester A, and then ends the selection of the second task identifier.

### Fifth Application Scenario

In the fourth application scenario, the requester may set multiple conditions for multiple user selections at a time for selection according to different times. In this scenario, multiple conditions for multiple user selections may be set at a time, and then the multiple conditions for each user selection are periodically used for selection. For example, requester A has a meeting with users B, C, and D every Friday, plays golf with users C, D, and E every Saturday, and plays football with users D, E, and every Sunday. A specific selection process is as follows.

In step 701, requester A sends a request message to a CBUS server, where the request message includes: multiple conditions for selecting users, and a specific implementation manner for selecting users.

The multiple conditions for selecting users include: a first task identifier being Friday, with a condition being online and at work. The range for selecting users of the first task identifier is B, C, and D.

A second task identifier is Saturday, with a condition being online and loving golf. The range for selecting users of the second task identifier is C, D, and E.

A third task identifier is Sunday, with a condition being online and loving football. The range for selecting users of the third task identifier is L, M, and N.

The specific implementation manner for selecting users includes: a periodical interval for selection being one week, the selection time of the first task being Friday, the selection time of the second task being Saturday, and the selection time of the third task being Sunday.

A selection result processing manner preset by the CBUS server includes: sending all the URIs of the users satisfying the multiple conditions for selecting users and the range for selecting users set by the requester obtained by each selection to requester A.

In step 702, after receiving the request message, on Friday, the CBUS server makes a selection of the task identifier Friday, and finds that users B, C, and D are online, the states of users B and C are at work, and the state of user D is at home, so the CBUS server sends the URIs of users B and C satisfying the multiple conditions for selecting users and the range for selecting users to requester A; on Saturday, the CBUS server makes a selection of the task identifier Saturday, and finds that users D and E are online, user C is offline, users C and D love golf, user E loves basketball, so the CBUS server sends the URI of user D satisfying the multiple conditions for selecting users and the range for selecting users to requester A; and on Sunday, the CBUS server makes a selection of the task identifier Sunday, and finds that users L, M, and N are online and love-football, so the BUS server sends the URIs of users L, M, and N satisfying the multiple conditions for selecting users and the range for selecting users to requester A.

In step 703, since the period of multiple selections is one week, the CBUS server: makes the selection of the task identifier Friday, every Friday; makes the selection of the task identifier Saturday, every Saturday; and makes the selection of the task identifier Sunday, every Sunday; and sends all the URIs of the users satisfying the multiple conditions for selecting users and the range for selecting users obtained by each selection to requester A.

### Sixth Application Scenario

From the first to the fifth application scenarios, the ending time of multiple selections may be achieved through a periodical interval set by the requester, or through the number of times of multiple selections. In this application scenario, the ending time of multiple selections may also be achieved through a range for selecting users set by the requester, and when users in the range for selecting users are all selected, and the URIs of users in the range for selecting users are sent to the requester, the multiple selections end, which is not limited by the ending time and the number of times of selection, for example, requester A wants to establish a session with users B, C, D, E, and F. A specific selection process is as follows.

In step 801, requester A sends a request message to a CBUS server, where the request message includes: multiple conditions for selecting users, a range for selecting users, a specific implementation manner for selecting users, and a selection result processing manner.

The conditions for selecting users include: online.

The range for selecting users is B, C, D, E, and F.

The specific implementation manner for selecting users includes: a selection period of I hour, and a condition of ending selection being that the selection is ended after all users are selected.

The selection result processing manner includes: sending all the URIs of the users satisfying the multiple conditions for selecting users and the range for selecting users set by the requester obtained by each selection to requester A.

In step 802, the CBUS server receives the request message, starts to make a first selection, obtains user information satisfying the conditions for selecting users and the range for selecting users from a presence server, and learns from a message returned by the presence server that users B and C are online. In this case, the CBUS server sends the URIs of users B and C to requester A, and stores the URIs of users B and C into a sent user list at the same time. A specific storage result is as shown in Table 6.

**Table 6**

| | **User Range List** | **List of URIs Already Sent** |
|---|---|---|
| | **URI** | **URI** |
| | B@example.com | B@example.com |
| | C@example.com | C@example.com |
| | D@example.com | |
| | E@example.com | |
| | F@example.com | |
| Number | 5 | 2 |

In step 803, before making a second selection, the CBUS server compares the number of users in the list of users whose URIs being sent with the number of users in a user range list set by requester A, and when the number of users in the sent user list is less than the number of users in the set user range list, the CBUS server makes a next selection. At this time, the CBUS server finds that users B, C, D, E, and F are online, and thus sends the URIs of users B, C, D, E, and F to requester A, and stores the URIs of users B, C, D, E, and F into the sent list. A specific storage result is as shown in Table 7.

**Table 7**

| | **User Range List** | **List of URIs Already Sent** |
|---|---|---|
| | **URI** | **URI** |
| | B@example.com | B@example.com |
| | C@example.com | C@example.com |
| | D@example.com | D@example.com |
| | E@example:com | E@example.com |
| | F@example.com | F@example.com |
| Number | 5 | 5 |

In step 804, before making selections, the CBUS server determines through comparison whether the number of users in the sent list equals to the number of users in the set user range list, and if the number of users in the sent list equals to the number of users in the set user range list, it indicates that the range for selecting users requested by requester A is already completed, and the selection ends.

### Seventh Application Scenario

When multiple selections are made, a result of each selection may possibly be repetitive, which may increase the workload of selection of the CBUS server, and reduce the working efficiency. In order to solve the deficiency, the CBUS server may subscribe to user information satisfying multiple conditions for selecting users and a range for selecting users from related servers, and cancels the subscription to the users after the URIs of the users satisfying the multiple conditions for selecting users and the range for selecting users are sent to the requester. For example, requester A notifies users B, C, D, E, and F to go swimming together at weekends. A specific selection process is as follows.

In step 901, requester A sends a request message to a CBUS server, where the request message includes: multiple conditions for selecting users, a range for selecting users, a specific implementation manner for selecting users, and a selection result processing manner.

The multiple conditions for selecting users include: online, geographically located in Beijing, and loving swimming.

The range for selecting users is B, C, D, E, and F.

The specific implementation manner for selecting users includes: subscribing to information of the five users from the CBUS server, and ending the subscription on Saturday.

The selection result processing manner includes: after the URI of a user is sent to requester A, canceling the subscription to the information of the user.

In step 902, the CBUS server receives the request message, subscribes to online information and interest and hobby information of users B, C, D, E, and F from a presence server, and subscribes to location information of users B, C, D, E, and F from a location server according to the multiple conditions for selecting users and the range for selecting users set by the requester. Information returned by the presence server is that users B, C, and D are online, users E and F are offline, and users B, C, D, E, and F love swimming; and information returned by the location server is that only user B is in Beijing. The CBUS server finds through evaluation that user B satisfies the multiple conditions for selecting users and the range for selecting users set by the requester, and then sends the URI of user B to requester A, and cancels the subscription to user B at the same time. A specific selection result is as shown in Table 8.

**Table 8**

| **Subscribed User Range** | **Condition Information** | | | **Determination** |
|---|---|---|---|---|
| **URI** | **State** | **Interest and Hobby** | **Location Information** | |
| B@example.com | Online | Swimming | Beijing | Sent, and the subscription of User B's information is cancelled |
| C@example.com | Online | Swimming | Tianjin | |
| D@example.com | Online | Swimming | Shanghai | |
| E@example.com | Offline | Swimming | Tianjin | |
| F@example.com | Offline | Swimming | Shanghai | |

In step 903, the CBUS server finds during the following selections that the state of user E is changed to online in information returned by the presence server, and the location information of users C and E is changed to Beijing in information returned by the location server, and in this case, the CBUS server sends the URIs of users C and E to requester A, and cancels the subscription to users C and E at the same time; the specific selection result is as shown in Table 9.

**Table 9**

| **Subscribed User Range** | **Condition Information** | | | **Determination** |
|---|---|---|---|---|
| **URI** | **State** | **Interest and Hobby** | **Location Information** | |
| C@example.com | Online | Swimming | Beijing | Sent, and the subscription of User C's information is cancelled |
| D@example.com | Online | Swimming | Shanghai | |
| E@example.com | Online | Swimming | Beijing | Sent, and the subscription of User E's information is cancelled |
| F@example.com | Offline | Swimming | Shanghai | |

In step 904, at this time, the CBUS server only subscribes to the presence information and the location information of users D and F, and if the subscription information of users D and F does not change, the BUS server will not receive any changed information, so no URI of the user satisfying the multiple conditions for selecting users and the range for selecting users set by the requester is notified to requester A; and when the CBUS server finds that the information of users D and F satisfies the multiple conditions for selecting users and the range for selecting users set by the requester, the CBUS server sends the URIs of users D and F to requester A, and cancels the subscription to users D and F at the same time. The process is repeated until the subscription ends on Saturday.

### Eighth Application Scenario

In some situations, the specific implementation manner for selecting users may also be changed, for example, a period is long at first and becomes shorter later. For example, requester A wants to have a meeting with users B, C, D, E, and F on Wednesday, so requester A needs to check whether the five users are online on Monday and Tuesday, and if the users are online, requester A sends a notice of the meeting on Wednesday. On Monday, the selection period is one selection every 12 hours, and on Tuesday, since the meeting is approaching, the selection period is set to one selection every 7 hours. A specific selection process is as follows.

In step 1001, requester A sends a request message to a CBUS server, where the request message includes: multiple conditions for selecting users, a range for selecting users, a specific implementation manner for selecting users, and a selection result processing manner.

The multiple conditions for selecting users include: online.

The range for selecting users is B, C, D, E, and F.

The specific implementation manner for selecting users includes: a selection period of 12 hours on Monday, and a selection period of 7 hours on Tuesday, with a starting time at 8 a.m. on Monday, and ending selection before Wednesday.

The selection result processing manner includes: comparing the user information obtained by each selection with the sent user information, and sending the URI of the same user to requester A only once.

In step 1002, after receiving the request message, the CBUS server starts to make a selection on Monday, and finds that user B satisfies the multiple conditions for selecting users and the range for selecting users set by the requester, so the CBUS server sends the URI of user B to requester A; when making a selection on Tuesday, the CBUS server finds that users C, D, and E satisfy the multiple conditions for selecting users and the range for selecting users set by the requester, so the CBUS server sends the URIs of users C, D, and E to requester A, and stores the URIs of the users satisfying the multiple conditions for selecting users and the range for selecting users set by the requester each time into a sent user list, for comparison with the users sent next time. A specific selection result is as shown in Table 10.

**Table 10**

| **Selection Time** | **User URI** | **Presence Information** | **State Determination** |
|---|---|---|---|
| | B@example.com | Online | Sent and stored |
| | C@example.com | Offline | |
| 8:00 Monday | D@example.com | Offline | |
| | E@example.com | Offline | |
| | F@example.com | Offline | |
| | B@example.com | Online | Already sent |
| | C@example.com | Offline | |
| 20:00 on Monday | D@example.com | Offline | |
| | E@example:com | Offline | |
| | F@example.com | Offline | |
| | B@example.com | Online | Already sent |
| | C@example.com | Online | Sent and stored |
| 6:00 on Tuesday | D@example.com | Online | Sent and stored |
| | E@example.com | Offline | |
| | F@example.com | Offline | |
| | B@example.com | Online | Already sent |
| | C@example.com | Online | Already sent |
| 13:00 on Tuesday | D@example.com | Online | Already sent |
| | E@example.com | Online | Sent and stored |
| | F@example.com | Offline | |
| | B@example.com | Online | Already sent |
| | C@example.com | Online | Already sent |
| 20:00 on Tuesday | D@example.com | Online | Already sent |
| | E@example.com | Online | Already sent |
| | F@example.com | Offline | |

In step 1003, the CBUS server ends the selection before Wednesday.

### Ninth Application Scenario

In the fifth application scenario, a requester sets different implementation manners for selecting users, and the implementation manners for selecting users have the same selection period, which is seven days. In this application scenario, the requester may also set different selection periods for different conditions, and make selections according to the selection -period for each condition. For example, requester A has a meeting with users B, C, and D every Friday, plays golf with users C, D, and E on Saturday every two weeks, and plays football with users D, E, and F on Sunday every three weeks. A specific selection process is as follows.

In step 1101, requester A sends a request message to a CBUS server, where the request message includes: multiple conditions for selecting users, a range for selecting users, a specific implementation manner for selecting users, and a selection result processing manner.

The multiple conditions for selecting users are: a first task identifier being Friday, with a condition being online and at work; a second task identifier being Saturday, with a condition being online and loving golf; a third task identifier being Sunday, with a condition being online and loving football; the range for selecting users of the first task identifier is B, C, and D. The range for selecting users of the second task identifier is C, D, and E. The range for selecting users of the third task identifier is L, M, and N.

The specific implementation manner for selecting users is as follows: a selection time of the task identifier Friday is: selecting on Friday, with a selection period of one week; a selection time of the task identifier Saturday is: selecting on Saturday, with a selection period of two weeks; and a selection time of the task identifier Sunday is: selecting on Sunday, with a selection period of three weeks.

The selection result processing manner includes: sending all the URIs of the users satisfying the set multiple conditions for selecting users and range for selecting users obtained by each selection to requester A.

In step 1102, on Friday, when the CBUS server makes a selection of the task identifier Friday to a presence server, the CBUS server finds that users B, C, and D are online, users B and C are at work, and user D is at home, so the CBUS server sends the URIs of users B and C satisfying the set multiple conditions for selecting users and range for selecting users to requester A, and a specific selection result is as shown in Table 11; on Saturday, the CBUS server makes a selection of the task identifier Saturday, and finds that users D and E are online, user C is offline, users C and D love golf, and user E loves basketball, so the CBUS server sends the URI of user D satisfying the set multiple conditions for selecting users and range for selecting users to requester A, and a specific selection result is as shown in Table 12; on Sunday, the CBUS server makes a selection of the task identifier Sunday, and finds that users L, M, and N are online and love football, so the CBUS server sends the URIs of users L, M, and N satisfying the set multiple conditions for selecting users and range for selecting users to requester A. After one period of selection of the task identifiers Friday, Saturday, and Sunday, a specific selection result is as shown in Table 13.

**Table 11**

| **Selection Identifier** | **User Range** | **Selection Condition** | | **Selection Time** | **Determination** |
|---|---|---|---|---|---|
| | **URI** | **State Information** | **Location** | | |
| | B@example.com | Online | At work | Friday (June 6, 2008) | Sent |
| Friday | C@example.com | Online | At work | Friday (June 6, 2008) | Sent |
| | D@example.com | Online | At home | Friday (June 6, 2008) | |
| | B@example.com | Online | At work | Friday (June 13, 2008) | Sent |
| Friday | C@example.com | Offline | At work | Friday (June 13, 2008) | |
| | D@example.com | Offline | At work | Friday (June 13, 2008) | |

**Table 12**

| **Selection Identifier** | **User Range** | **Selection Condition** | | **Selection Time** | **Determination** |
|---|---|---|---|---|---|
| | **URI** | **State Information** | **Hobby** | | |
| | C@example.com | Offline | Golf | Saturday (June 7, 2008) | |
| Saturday | D@example.com | Online | Golf | Saturday (June 7, 2008) | |
| | E@example.com | Online | Basketball | Saturday (June 7, 2008) | Sent |
| | C@example.com | Online | Golf | Saturday (June 21, 2008) | |
| Saturday | D@example.com | Offline | Golf | Saturday (June 21, 2008) | Sent |
| | E@example.com | Offline | Basketball | Saturday (June 21, 2008) | |

**Table 13**

| **Selection Identifier** | **User Range** | **Selection Condition** | | **Selection Time** | **Determination** |
|---|---|---|---|---|---|
| | **URI** | **State Information** | **Hobby** | | |
| | L@example.com | Online | Football | Sunday (June 8, 2008) | Sent |
| Sunday | M@example.com | Online | Football | Sunday (June 8, 2008) | Sent |
| | N@example.com | Online | Football | Sunday (June 8, 2008) | Sent |
| | L@example.com | Online | Football | Sunday (June 29, 2008) | Sent |
| Sunday | M@example.com | Offline | Football | Sunday (June 29, 2008) | |
| | N@example.com | Offline | Football | Sunday (June 29, 2008) | |

In step 1103, the CBUS server makes selections in sequence according to the selection period of each identifier, and sends the selection result to requester A according to the election result processing manner.

Through the technical solution provided by the embodiment of the present invention, by setting the multiple conditions for selecting users and the specific implementation manner for selecting users, diversified demands of users can be satisfied, and thus the quality of user experience is improved.

### Embodiment 3

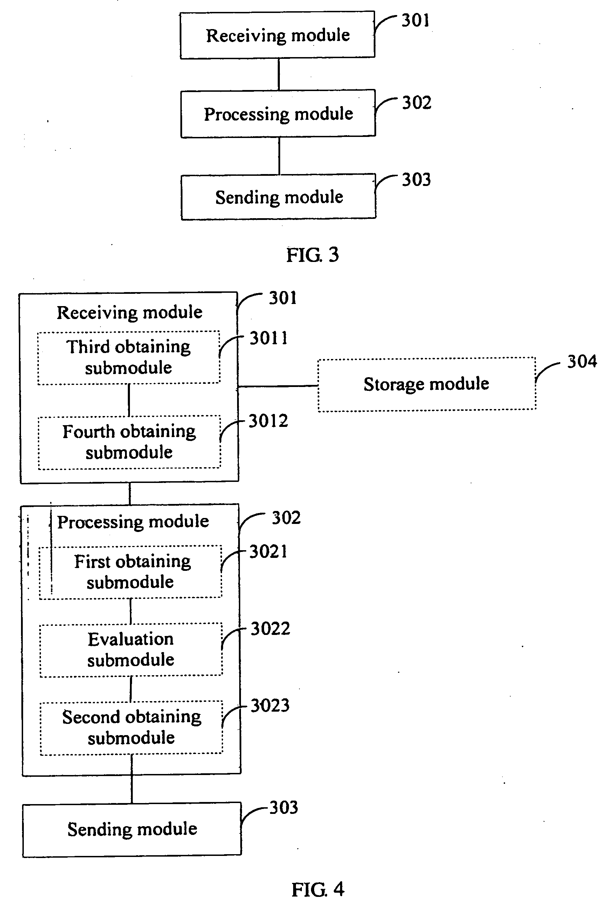

Embodiment 3 of the present invention provides a CBUS server. As shown in FIG. 3, the CBUS server includes a receiving module 301, a processing module 302, and a sending module 303.The receiving module 301 is configured to receive a request message sent by a requester, where the request message includes multiple conditions for selecting users and a specific implementation manner for selecting users.

The processing module 302 is configured to obtain user information respectively -satisfying each condition according to the specific implementation manner for selecting users, and obtain by selecting the user information satisfying the multiple conditions from the user information respectively satisfying each condition.

The sending module 303 is configured to send the user information satisfying the multiple conditions obtained by the processing module 302 to the requester.

Moreover, FIG. 4 is a structural view of another CBUS server according to Embodiment 3 of the present invention. In FIG 4, the processing module 302 further includes a first obtaining submodule 3021, an evaluation submodule 3022, and a second obtaining submodule 3023.

The first obtaining submodule 3021 is configured to obtain the user information according to the multiple conditions for selecting users and the specific implementation manner for selecting users.

The evaluation submodule 3022 is configured to evaluate the user information.

The second, obtaining submodule 3023 is configured to obtain the user information satisfying the multiple conditions for selecting users, where the user information includes a URI.

Moreover, the obtaining module 301 further includes a third obtaining submodule 3011.

The third obtaining submodule 3011 is configured to obtain a selection result processing manner according to the request message.

Correspondingly, the sending module 303 is further configured to send the user information satisfying the multiple conditions to the requester according to the selection result processing manner.

Here, the selection result processing manner may include at least one of the following manners:
sending the URIs of the users obtained by each selection to the requester; or
comparing a result of each selection with a sent result of a previous selection, and only sending the user information not sent the previous time, such as the URIs; or
summanzing and sending the user information, for example, the URIs, satisfying each condition obtained by each selection, to the requester.

Moreover, the CBUS server further includes a storage module 304.

The storage module 304 is configured to store a specific implementation manner, and the specific implementation manner is loaded into the request message by the requester.

Moreover, the obtaining module 301 further includes a fourth obtaining submodule 3012.

The fourth obtaining submodule 3012 is configured to obtain a range for selecting users according to the request message.

Correspondingly, the first obtaining submodule 3021 is further configured to obtain the user information satisfying the range for selecting users according to the specific implementation manner for selecting users.

Furthermore, the request message further includes the range for selecting users and the selection result processing manner at the same time.

Moreover, the multiple conditions for selecting users include at least one of the following information: a presence information condition, a location information condition, and a terminal capability information condition.

The specific implementation manner for selecting users is adopted for periodically or regularly evaluating the conditions for selecting users, and may include at least one of: a time interval for implementing selection, a starting time for implementing selection, and an ending time for implementing selection.

It should be noted that, the specific implementation process of the server belongs to the same inventive concept as the relevant descriptions of the above method embodiments, and reference may be made to the above method embodiments, so that the details will not be described herein again.

In this embodiment, with the aid of setting the multiple conditions for selecting users and the specific implementation manner for selecting users, diversified demands of users are satisfied, and thus the quality of user experience is improved.

### Embodiment 4

Embodiment 4 of the present invention provides a system for selecting users, which includes the server for selecting users as described in Embodiment 3, and reference may be made to FIGs. 3 and 4 of Embodiment 3.

The specific implementation process of the server for selecting users belongs to the same inventive concept as the relevant descriptions of the above method embodiments, and reference may be made to the above method embodiments, so that the details will not be described herein again.

It should be noted that, in the above device and system embodiments, each included unit is divided according to a functional logic, but is not limited to the above division as long as the corresponding function can be realized; moreover, the specific name of each functional unit is only for the convenience of mutual differentiation, and thus is not intended to limit the protection scope of the present invention.

In this embodiment, by setting the multiple conditions for selecting users and the specific implementation manner for selecting users, diversified demands of users are satisfied, and thus the quality of user experience is improved.

Those of ordinary skill in the art should understand that all or a part of the steps of the method according to the embodiments of the present invention may be implemented by a program instructing relevant hardware. The program may be stored in a computer readable storage medium. The storage medium may be a floppy disk, a hard disk or an optical disk of a computer.

The above descriptions are merely some exemplary embodiments of the present invention, but are not intended to limit the present invention. Any modification, equivalent replacement, or improvement made without departing from the principle of the present invention should fall within the protection scope of the present invention.

## Claims

1. A method for selecting users, comprising:
Receiving (201) a request message sent by a requester, wherein the request message comprises multiple conditions for selecting users, a selection result processing manner and a specific implementation manner for selecting users;
Obtaining (202) user information respectively satisfying each condition according to the specific implementation manner for selecting users; and
Obtaining (203) by selecting the user information satisfying the multiple conditions from the user information respectively satisfying each condition, and returning the user information satisfying the multiple conditions to the requester according to the selection result processing manner;
wherein the specific implementation manner for selecting users is adopted for periodically or regularly evaluating the conditions for selecting users, and information of the specific implementation manner comprises: at least one of: a time interval for implementing selection, a starting time for implementing selection, and an ending time for implementing selection.

2. The method according to claim 1, wherein the request message further comprises a range for selecting users; and
the obtaining the user information respectively satisfying each condition according to the specific implementation manner for selecting users comprises:
obtaining the user information respectively satisfying each condition for selecting users and the range for selecting users according to the specific implementation manner for selecting users.

3. The method according to claim 1, wherein the selection result processing manner comprises one of the following manners:
Returning (204) the user information satisfying each condition obtained by each selection to the requester; or
Comparing (305) a result of each selection with a sent result of a previous selection, and only returning the user information satisfying each condition not sent the previous time to the requester; or
summarizing and returning (403) the user information satisfying each condition obtained by each selection to the requester.

4. The method according to claim 1, wherein the specific implementation manner for selecting users is specified by the requester in the request message; or is specified by a server, and loaded into the request message by the requester.

5. The method according to any one of claims 1 to 4, wherein
the multiple conditions for selecting users comprise at least one of the following information: a presence information condition, a location information condition, and a terminal capability information condition.

6. A server for selecting users based on conditions, comprising:
a receiving module (301), configured to receive a request message sent by a requester, wherein the request message comprises multiple conditions for selecting users, a selection result processing manner and a specific implementation manner for selecting users;
a processing module (302), configured to obtain user information respectively satisfying each condition according to the specific implementation manner for selecting users, and obtain users by selecting the user information satisfying the multiple conditions from the user information respectively satisfying each condition; and
a sending module (303), configured to send the user information satisfying the multiple conditions obtained by the processing module to the requester according to the selection result processing manner;
wherein the specific implementation manner for selecting users is adopted for periodically or regularly evaluating the conditions for selecting users, and may include at least one of: a time interval for implementing selection, a starting time for implementing selection, and an ending time for implementing selection.

7. The server for selecting users according to claim 6, wherein the processing module comprises:
a first obtaining submodule (3021), configured to obtain the user information respectively satisfying each condition for selecting users according to the specific implementation manner for selecting users;
an evaluation submodule (3022), configured to evaluate the user information; and
a second obtaining submodule (3023), configured to obtain the user information satisfying the multiple conditions for selecting users.

8. The server for selecting users according to claim 6, wherein the receiving module further comprises:
a third obtaining submodule (3011), configured to obtain a selection result processing manner according to the request message; and
correspondingly, the sending module is further configured to send the user information satisfying the multiple conditions to the requester according to the selection result processing manner.

9. The server for selecting users according to claim 6, further comprising:
a storage module (304), configured to store a specific implementation manner, wherein the specific implementation manner is loaded into the request message by the requester.

10. The server for selecting users according to claim 6, wherein the receiving module further comprises:
a fourth obtaining submodule (3012), configured to obtain a range for selecting users according to the request message; and
correspondingly, the first obtaining submodule is further configured to obtain the user information satisfying the range for selecting users according to the specific implementation manner for selecting users.

11. A system for selecting users, comprising the server for selecting users according to any one of claims 6 to 10.

## Patentansprüche

1. Verfahren zur Benutzerauswahl, umfassend:
Empfangen (201) einer Anforderungsnachricht, die von einem Anforderer gesendet wird, wobei die Anforderungsnachricht mehrere Bedingungen für die Benutzerauswahl, eine Auswahlergebnis-Verarbeitungsweise und eine spezifische Realisierungsweise für die Benutzerauswahl umfasst;
Erhalten (202) von Benutzerinformationen, die jeweils jeder Bedingung entsprechen, gemäß der spezifischen Realisierungsweise für die Benutzerauswahl; und
Erhalten (203) der Benutzerinformationen, die den mehreren Bedingungen entsprechen, durch Auswahl aus den Benutzerinformationen, die jeweils jeder Bedingung entsprechen, und Zurücksenden der Benutzerinformationen, die den mehreren Bedingungen entsprechen, an den Anforderer gemäß der Auswahlergebnis-Verarbeitungsweise;
wobei die spezifische Realisierungsweise für die Benutzerauswahl dazu genutzt wird, periodisch oder regelmäßig die Bedingungen für die Benutzerauswahl zu evaluieren, und Informationen der spezifischen Realisierungsweise umfassen: wenigstens eines von: einem Zeitintervall zum Realisieren der Auswahl, einer Startzeit für das Realisieren der Auswahl und einer Endzeit für das Realisieren der Auswahl.

2. Verfahren gemäß Anspruch 1, wobei die Anforderungsnachricht ferner einen Bereich für die Benutzerauswahl umfasst; und
das Erhalten der Benutzerinformationen, die jeweils jeder Bedingung entsprechen, gemäß der spezifischen Realisierungsweise für die Benutzerauswahl umfasst:
Erhalten der Benutzerinformationen, die jeweils jeder Bedingung für die Benutzerauswahl entsprechen, und des Bereichs für die Benutzerauswahl gemäß der spezifischen Realisierungsweise für die Benutzerauswahl.

3. Verfahren gemäß Anspruch 1, wobei die Auswahlergebnis-Verarbeitungsweise eine der folgenden Weisen umfasst:
Zurücksenden (204) der Benutzerinformationen, die jeder Bedingung entsprechen, welche durch jede Auswahl erhalten wurden, an den Anforderer; oder
Vergleichen (305) eines Ergebnisses jeder Auswahl mit einem gesendeten Ergebnis einer vorherigen Auswahl, und Zurücksenden lediglich der Benutzerinformationen, die jeder Bedingung entsprechen, die beim vorherigen Mal nicht gesendet wurden, an den Anforderer; oder
Zusammenfassen und Zurücksenden (403) der Benutzerinformationen, die jeder Bedingung entsprechen, welche durch jede Auswahl erhalten wurden, an den Anforderer.

4. Verfahren gemäß Anspruch 1, wobei die spezifische Realisierungsweise für die Benutzerauswahl vom Anforderer in der Anforderungsnachricht spezifiziert wird; oder von einem Server spezifiziert und vom Anforderer in die Anforderungsnachricht eingetragen wird.

5. Verfahren gemäß einem der Ansprüche 1 bis 4, wobei
die mehreren Bedingungen für die Benutzerauswahl wenigstens eine der folgenden Informationen umfassen: eine Präsenzinformationsbedingung, eine Ortsinformationsbedingung und eine Endgerätfähigkeit-Informationsbedingung.

6. Server zur bedingungsbasierten Benutzerauswahl, umfassend:
ein Empfangsmodul (301), das ausgelegt ist zum Empfangen einer Anforderungsnachricht, die von einem Anforderer gesendet wird, wobei die Anforderungsnachricht mehrere Bedingungen für die Benutzerauswahl, eine Auswahlergebnis-Verarbeitungsweise und eine spezifische Realisierungsweise für die Benutzerauswahl umfasst;
ein Verarbeitungsmodul (302), das ausgelegt ist zum Erhalten von Benutzerinformationen, die jeweils jeder Bedingung entsprechen, gemäß der spezifischen Realisierungsweise für die Benutzerauswahl, und Erhalten von Benutzern durch Auswahl der Benutzerinformationen, die den mehreren Bedingungen entsprechen, aus den Benutzerinformationen, die jeweils jeder Bedingung entsprechen; und
ein Sendemodul (303), das dafür ausgelegt ist, die Benutzerinformationen, die den mehreren Bedingungen entsprechen, welche vom Verarbeitungsmodul erhalten wurden, an den Anforderer zu senden gemäß der Auswahlergebnis-Verarbeitungsweise;
wobei die spezifische Realisierungsweise für die Benutzerauswahl dazu genutzt wird, periodisch oder regelmäßig die Bedingungen für die Benutzerauswahl zu evaluieren, und wenigstens eines der Folgenden aufweisen kann: ein Zeitintervall zum Realisieren der Auswahl, eine Startzeit für das Realisieren der Auswahl und eine Endzeit für das Realisieren der Auswahl.

7. Server zur Benutzerauswahl gemäß Anspruch 6, wobei das Verarbeitungsmodul umfasst:
ein erstes Erhaltungsuntermodul (3021), das ausgelegt ist zum Erhalten der Benutzerinformationen, die jeweils jeder Bedingung für die Benutzerauswahl entsprechen, gemäß der spezifischen Realisierungsweise für die Benutzerauswahl;
ein Evaluationsuntermodul (3022), das ausgelegt ist zum Evaluieren der Benutzerinformationen; und
ein zweites Erhaltungsuntermodul (3023), das ausgelegt ist zum Erhalten der Benutzerinformationen, die den mehreren Bedingungen für die Benutzerauswahl entsprechen.

8. Server zur Benutzerauswahl gemäß Anspruch 6, wobei das Empfangsmodul ferner umfasst:
ein drittes Erhaltungsuntermodul (3011), das ausgelegt ist zum Erhalten einer Auswahlergebnis-Verarbeitungsweise gemäß der Anforderungsnachricht; und
entsprechend ist das Sendemodul ferner ausgelegt zum Senden der Benutzerinformationen, die den mehreren Bedingungen entsprechen, an den Anforderer gemäß der Auswahlergebnis-Verarbeitungsweise.

9. Server zur Benutzerauswahl gemäß Anspruch 6, ferner umfassend:
ein Speichermodul (304), das ausgelegt ist zum Speichern einer spezifischen Realisierungsweise, wobei die spezifische Realisierungsweise vom Anforderer in die Anforderungsnachricht eingetragen wird.

10. Server zur Benutzerauswahl gemäß Anspruch 6, wobei das Empfangsmodul ferner umfasst:
ein viertes Erhaltungsuntermodul (3012), das ausgelegt ist zum Erhalten eines Bereichs für die Benutzerauswahl gemäß der Anforderungsnachricht; und
entsprechend ist das erste Erhaltungsuntermodul ferner ausgelegt zum Erhalten der Benutzerinformationen, die dem Bereich für die Benutzerauswahl entsprechen, gemäß der spezifischen Realisierungsweise für die Benutzerauswahl.

11. System zur Benutzerauswahl, das den Server zur Benutzerauswahl gemäß einem der Ansprüche 6 bis 10 umfasst.

## Revendications

1. Procédé de sélection d'utilisateurs, comprenant :
la réception (201) d'un message de demande envoyé par un demandeur, le message de demande comprenant de multiples conditions pour la sélection d'utilisateurs, un mode de traitement du résultat de la sélection et un mode de mise en oeuvre spécifique de la sélection d'utilisateurs ;
l'obtention (202) d'informations d'utilisateurs satisfaisant respectivement chaque condition conformément au mode de mise en oeuvre spécifique de la sélection d'utilisateurs ; et
l'obtention (203) d'utilisateurs en sélectionnant les informations d'utilisateurs qui satisfont les multiples conditions parmi les informations d'utilisateurs satisfaisant respectivement chaque condition, et le renvoi des informations d'utilisateurs qui satisfont les multiples conditions au demandeur fonction conformément au mode de traitement du résultat de la sélection ;
dans lequel le mode de mise en oeuvre spécifique de la sélection d'utilisateurs est adopté pour évaluer périodiquement ou régulièrement les conditions de sélection d'utilisateurs, et les informations du mode de mise en oeuvre spécifique comprennent : au moins l'un d'un : intervalle de temps de mise en oeuvre de la sélection, temps de début de mise en oeuvre de la sélection et temps de fin de la mise en oeuvre de la sélection.

2. Procédé selon la revendication 1, dans lequel le message de demande comprend en outre une plage de sélection d'utilisateurs ; et
l'obtention des informations d'utilisateurs satisfaisant respectivement chaque condition conformément au mode de mise en oeuvre spécifique de la sélection d'utilisateurs comprend :
l'obtention des informations d'utilisateurs satisfaisant respectivement chaque condition de sélection d'utilisateurs et la plage de sélection d'utilisateurs conformément au mode de mise en oeuvre spécifique de la sélection d'utilisateurs.

3. Procédé selon la revendication 1, dans lequel le mode de traitement du résultat de la sélection comprend l'un des modes suivants :
le renvoi (204) des informations d'utilisateurs satisfaisant chaque condition obtenues par chaque sélection au demandeur ; ou
la comparaison (305) d'un résultat de chaque sélection à un résultat envoyé d'une sélection précédente, et le renvoi uniquement des informations d'utilisateurs satisfaisant chaque condition non envoyées la fois précédente au demandeur ; ou
le résumé et le renvoi (403) des informations d'utilisateurs satisfaisant chaque condition obtenues par chaque sélection au demandeur.

4. Procédé selon la revendication 1, dans lequel le mode de mise en oeuvre spécifique de la sélection d'utilisateurs est spécifié par le demandeur dans le message de demande ; ou est spécifié par un serveur, et chargé dans le message de demande par le demandeur.

5. Procédé selon l'une quelconque des revendications 1 à 4, dans lequel les multiples conditions de sélection d'utilisateurs comprennent au moins l'une des informations suivantes : une condition d'information de présence, une condition d'information de position, et une condition d'information de qualité de terminal.

6. Serveur de sélection d'utilisateurs en fonction de conditions, comprenant :
un module de réception (301), configuré pour recevoir un message de demande envoyé par un demandeur, le message de demande comprenant de multiples conditions pour la sélection d'utilisateurs, un mode de traitement du résultat de la sélection et un mode de mise en oeuvre spécifique de la sélection d'utilisateurs ;
un module de traitement (302), configuré pour obtenir des informations d'utilisateurs satisfaisant respectivement chaque condition conformément au mode de mise en oeuvre spécifique de la sélection d'utilisateurs et obtenir des utilisateurs en sélectionnant les informations d'utilisateurs qui satisfont les multiples conditions parmi les informations d'utilisateurs satisfaisant respectivement chaque condition ; et
un module d'envoi (303) configuré pour envoyer les informations d'utilisateurs qui satisfont les multiples conditions obtenues par le module de traitement au demandeur conformément au mode de traitement du résultat de la sélection ;
dans lequel le mode de mise en oeuvre spécifique de la sélection d'utilisateurs est adopté pour évaluer périodiquement ou régulièrement les conditions de sélection d'utilisateurs, et peut inclure au moins l'un d'un : intervalle de temps de mise en oeuvre de la sélection, temps de début de mise en oeuvre de la sélection et temps de fin de la mise en oeuvre de la sélection.

7. Serveur de sélection d'utilisateurs selon la revendication 6, dans lequel le module de traitement comprend :
un premier sous-module d'obtention (3021), configuré pour obtenir les informations d'utilisateurs satisfaisant respectivement chaque condition de sélection d'utilisateurs conformément au mode de mise en oeuvre spécifique de la sélection d'utilisateurs ;
un sous-module d'évaluation (3022), configuré pour évaluer les informations d'utilisateurs : et
un deuxième sous-module d'obtention (3023), configuré pour obtenir les informations d'utilisateurs satisfaisant les multiples conditions de sélection d'utilisateurs.

8. Serveur de sélection d'utilisateurs selon la revendication 6, dans lequel le module de réception comprend :
un troisième sous-module d'obtention (3011), configuré pour obtenir un mode de traitement du résultat de la sélection en fonction du message de demande ; et
parallèlement, le module d'envoi est configuré en outre pour envoyer les informations d'utilisateurs satisfaisant les multiples conditions au demandeur conformément au mode de traitement du résultat de la sélection.

9. Serveur de sélection d'utilisateurs selon la revendication 6, comprenant en outre :
un module de mémorisation (304), configuré pour mémoriser un mode de mise en oeuvre spécifique, dans lequel le mode de mise en oeuvre spécifique est chargé dans le message de demande par le demandeur.

10. Serveur de sélection d'utilisateurs selon la revendication 6, comprenant en outre :
un quatrième sous-module d'obtention (3012), configuré pour obtenir une plage de sélection d'utilisateurs conformément au message de demande ; et
parallèlement, le premier sous-module d'obtention est configuré en outre pour obtenir les informations d'utilisateurs satisfaisant la plage de sélection d'utilisateurs conformément au mode de mise en oeuvre spécifique de sélection d'utilisateurs.

11. Système de sélection d'utilisateurs, comprenant le secteur de sélection d'utilisateurs selon l'une quelconque des revendications 6 à 10.
